Europäisches Patentamt

European Patent Office

Office européen des brevets

(11) Veröffentlichungsnummer: **0 256 467**

**A2**

(12) **EUROPÄISCHE PATENTANMELDUNG**

(21) Anmeldenummer: 87111530.9

(22) Anmeldetag: **10.08.87**

(51) Int. Cl.4: **C08G 63/48** , C08G 69/00 , C09J 3/26

(30) Priorität: **18.08.86 DE 3627923**

(43) Veröffentlichungstag der Anmeldung:
**24.02.88 Patentblatt 88/08**

(84) Benannte Vertragsstaaten:
**AT BE CH DE ES FR GB IT LI LU NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Tamm, Horst**
**Ernst-Reuter-Weg 5**
**D-5657 Haan(DE)**
Erfinder: **Fischer, Herbert, Dr.**
**Am Nettchesfeld 14**
**D-4000 Düsseldorf 13(DE)**
Erfinder: **Leder, Manfred, Dr.**
**Am Eichelkamp 161**
**D-4010 Hilden(DE)**

(54) **Niedermolekulare Polykondensate sowie deren Verwendung in wässrigen Klebstoffdispersionen.**

(57) Verfahren zur Herstellung von niedermolekularen, ungesättigten, bei Raumtemperatur fließfähigen Polykondensaten auf Basis von Doppelbindungen enthaltende Fettsäuren bzw. niedermolekulare epoxidierte Polybutadiene, die bei 25 °C eie Viskosität von 800 bis 25 000 mPa•s, vorzugsweise 1 000 bis 10 000 mPa•s aufweisen, und deren Säurezahlen zwischen 2 und 50, die OH-Zahlen zwischen 5 und 100 bzw. die Aminzahlen zwischen 5 und 100 liegen, sowie Verwendung der Verfahrensprodukte zusammen mit klebrigmachenden Harzen aus der Gruppe Balsamharz, modifizierte Balsamharze, Cumaron-Inden-Harze, Terpenharze als Bestandteil wäßriger Dispersionen, die als filmbildende Polymerisatklebstoffe eingesetzt werden können.

EP 0 256 467 A2

## Niedermolekulare Polykondensate sowie deren Verwendung in wäßrigen Klebstoffdispersionen

Die vorliegende Erfindung bezieht sich zunächst auf ein Verfahren zur Herstellung von niedermolekularen ungesättigten, bei Raumtemperatur fließfähigen Polykondensaten, die mit filmbildenden wäßrigen Dispersionen von verschiedenen Polymeren verträglich sind. Außerdem bezieht sich die Erfindung auf die Verwendung derartiger fließfähiger Polykondensate als eine klebrigmachende Komponente, welche zusammen mit anderen klebrigmachenden Naturharzen zur Verbesserung der primären Klebfähigkeit wäßrigen Kunststoffdispersionen eingearbeitet werden kann.

Es ist seit langem bekannt, wäßrigen Dispersionsklebstoffen auf Basis der verschiedensten Polymerisate bzw. Copolymerisate zur Verbesserung der Anfangsklebkraft die verschiedensten meist bei Raumtemperatur festen Harze, insbesondere Naturharze, einzuverleiben. Dazu ist es üblich, diese in Form einer konzentrierten Lösung in organischen Lösungsmitteln in die Dispersion der Polymerisate einzuemulgieren. Im Zuge der Verbesserung der Bedingungen an den Arbeitsplätzen wie auch der Verringerung der Freisetzung von Lösungsmitteln besteht seit langem die Aufgabe, den Gehalt in Lösungsmitteln in Klebstoffen zu verringern. Zwar sind wäßrige Dispersionen von Harzen bekannt, welche unter Verwendung von speziellen Emulgatoren hergestellt werden können. Überraschenderweise hat sich jedoch herausgestellt, daß diese Harzdispersionen nicht die gleiche günstige Wirkung entfalten, wies es die Harzlösungen in organischen Lösungsmitteln tun. Als Ausweg bietet sich hier an, die die Klebrigkeit verleihenden Naturharze in Weichmachern aufzulösen und so die Belastung mit organischen Lösungsmitteln zu verringern. Das allerdings führt zwar zu Klebstoffen mit einer guten Anfangshaftung, bringt jedoch eine Tendenz des Klebstoffs zum kalten Fluß mit sich. Dabei können insbesondere unter Verspannung stehende Klebungen sich wieder lösen.

Aufgabe der vorliegenden Erfindung was es daher, einen Weg zu finden, von organischen Lösungsmitteln freie wäßrige Klebstoffdispersionen mit einem erhöhten Tack zu finden, ohne daß gleichzeitig die Nachteile eines kalten Flusses in der Klebefuge in Kauf genommen werden müssen. Es bestand also die Aufgabe darin, geeignete neue, flüssige Zusatzstoffe zu finden, die den Klebedispersionen einen hohen Tack verleihen, aber gleichzeitig in der Klebefuge selbst nach einiger Zeit aushärten, um so eine dauerhafte feste Klebung zu ermöglichen, die insbesondere bei späterer Einwirkung von Wärme nicht erweicht und sich sogar wieder löst.

Es wurde nun gefunden, daß diese Aufgabe gelöst werden kann durch spezielle niedermolekulare, ungesättigte, bei Raumtemperatur fließfähige Polykondensate, welche dadurch hergestellt werden können, daß man Doppelbindungen enthaltende Fettsäuren bzw. noch Doppelbindungen aufweisende niedermolekulare epoxidierte Polybutadiene in an sich bekannter Weise mit Polyolen oder Aminen so umsetzt, daß die fließfähigen Reaktionsprodukte bei 25 °C eine Viskosität von 800 bis 25 000 mPa•s, vorzugsweise 1 000 bis 10 000 mPa•s nach Brookfield aufweisen und die Säurezahlen zwischen 2 und 50 sowie die OH-Zahlen zwischen 5 und 100 und Aminzahlen zwischen 5 und 100 liegen. Die resultierenden Reaktionsprodukte sollten Jodzahlen zwischen 50 und 300, vorzugsweise zwischen 70 und 150 aufweisen. Selbstverständlich sind im Prinzip flüssige, ungesättigte Polyester auf der Basis von ungesättigten Fettsäuren oder auch Polybutadienen bekannt. Die nach der Erfindung herzustellenden und erfindungsgemäßen Polyaddukte müssen jedoch bestimmte Voraussetzungen erfüllen, um für den Zweck der vorliegenden Erfindung brauchbar zu sein. Sie sollen ein relativ niedriges Molekulargewicht aufweisen, das im Zahlenmittel zwischen 1 000 und 10 000, bevorzugt aber zwischen 2 000 und 5 000 liegt. Als Ausgangsverbindung für derartige Polyaddukte, insbesondere Polyester eignen sich insbesondere ungesättigte Fettsäuren, wie sie aus pflanzlichen Fetten gewonnen werden können. Geeignete Ausgangsmaterialien sind z.B. Öle aus Soja, Sonnenblumenkernen, Leinsamen, sofern der Gehalt an Doppelbindungen ausreichend ist, um im Endprodukt die geforderten Jodzahlen von wenigstens 50 zu gewährleisten. Die als Ausgangsprodukte verwendbaren niedermolekularen Polybutadiene sollen ein Molgewicht (Zahlenmittel) zwischen etwa 500 und 5 000 aufweisen.

Die vorstehend charakterisierten, bei Raumtemperatur flüssigen Doppelbindungen enthaltenden Verbindungen können oxidativ härten, d.h. sie vernetzen über diese Doppelbindungen. Darauf ist vermutlich der erwünschte Effekt der Verfestigung der Klebefuge zurückzuführen, der insbesondere einer etwa vorhandenen Tendenz zum sogenannten kalten Fluß entgegenwirkt.

Die Kondensation der ungesättigten natürlichen Fettsäure, gegebenenfalls unter Mitverwendung untergeordneter Mengen anderer Carbonsäuren mit den verschiedensten Polyolen wird in an sich bekannter Weise durchgeführt. Dabei kann man nicht nur die ungesättigten Fettsäuren alleine einsetzen, sondern um einen bestimmten Grad der Verzweigung zu erreichen, auch mehrfunktionelle, aromatische und aliphatische Carbonsäuren sowie Gemische von Polyolen. Hier kommen in erster Linie als Rohstoffe in Betracht Phthalsäure, Isophthalsäure, ferner Adipinsäure sowie Hexadecandicarbonsäure. Unter den Alkoholen kommt neben dem Pentaerythrit und dem Trimethylolpropan die Mitverwendung von Diethylenglykol, Glycerin sowie Propylen-und Dipropylenglykol in Frage.

Die Polykondensation sollte unter Zusatz von Veresterungskatalysatoren und hochsiedenden organischen Lösungsmitteln als Schleppmittel für das gebildete Wasser durchgeführt werden. Aufgrund der Empfindlichkeit der Doppelbindung gegenüber dem Sauerstoff sollte die Polykondensation in bekannter Weise unter Stickstoff oder einem sonstigen inerten Gas vorgenommen werden.

Es war überraschend festzustellen, daß die vorstehend beschriebenen Weichharze mit einem hohen Gehalt an Doppelbindungen und noch beträchtlichen Säure-bzw. OH-Zahlen bzw. Aminzahlen die Einarbeitung von Klebrigkeit verleihenden Naturharzen in wäßrige Klebstoffdispersionen besonders günstig gestalten. Dabei können den Naturharzen verschiedene Mengen von flüssigen Polykondensaten zugesetzt werden, die allerdings so bemessen sein sollten, daß bei Raumtemperatur oder leicht erhöhter Temperatur noch flüssige nicht zu hochviskose Gemenge anfallen.

Das Gewichtsverhältnis der erfindungsgemäßen Weichharze zu den bekannten klebrigmachenden Harzen sollte etwa zwischen 1 : 0,5 und 1: 8, insbesondere zwischen 1 : 1 und 1 : 4 betragen.

Unter Zusatz von nichtionogenen Netzmitteln lassen sich die vorstehenden Mischungen besonders leicht, insbesondere bei etwas erhöhter Temperatur von 40 bis 90 °C herstellen und ebenso leicht in die handelsüblichen Klebstoffdispersionen einarbeiten. Derartige Klebstoffdispersionen stellen in der Regel in wäßriger Phase dispergierte Copolymerisate dar, wobei als Monomerer häufig Acrylester und/oder Vinylacetat fungieren. Im Falle der Acrylester soll die Alkoholkomponente 1 bis 8 Kohlenstoffatome aufweisen. Als Comonomere eignen sich neben den genannten Monomeren auch Vinylpropionat, weiterhin auch Methacrylsäureester von Alkoholen von 1 bis 8 Kohlenstoffatomen. Geeignete Klebstoffdispersionen basieren zum Beispiel auf Polyvinylacetat, das in geeigneter Weise mit weiteren Comonomeren wie etwa Ethylen und Vinylchlorid, aber auch Propylen oder dergleichen modifiziert wurde. Eine weitere Gruppe von geeigneten Klebstoffen basiert auf Latices, wie sie sich zum Beispiel aus Polybutadien, Polyisopren und Polybutadienacrylnitril oder auch Naturkautschuk herstellen lassen. Hervorgehoben seien unter diesen Latices solche aus Polybutadienstyrol (SBR). In derartige Dispersionen lassen sich die natürlichen, klebrigmachenden Harze mit den beschriebenen flüssigen Polykondensaten als Vehikel leicht einarbeiten, insbesondere unter Mitverwendung der bekannten Netzmittel auf Basis von Additionsprodukten des Ethylenoxids an Alkylphenole oder Fettalkohole.

Die wäßrigen Dispersionen bzw. Latices sind handelsübliche Produkte, welche zwischen 45 bis 65 Gew.-% an Feststoff enthalten. In seltenen Fallen wird die Grenze von 65 % gerinfügig überschritten. Bezogen auf den Feststoffgehalt sollen die klebrigmachenden Harze - üblicherweise Naturharze (Balsamharze) oder Harzester, teilweise auch synthetische Harze - in einer Menge von 100 bis 20 Gew.-Teilen, bezogen auf 100 Gew.-Teile des Feststoffgehalts der Polymerdispersion, vorliegen. In den üblicherweise alkalisch stabilisierten Latices werden selbstverständlich alkaliunlösliche Harze und Harzester, z.B. Cumaron-Inden-Harze eingesetzt.

Auf diese Weise können Klebstoffe in Dispersionsform erhalten werden, welche über 50 bzw. 60 % an Feststoff und gleichzeitig eine Viskosität haben, die einwandfreie Verarbeitung, d.h. Auftrag des Klebstoffs gestattet.

Neben diesen notwendigen Bestandteilen können die erfindungsgemäß modifizierten wäßrigen Dispersionen noch weitere Hilfsstoffe enthalten. Hier kommen in Frage Entschäumer, beispielsweise auf Basis von Polysiloxanen oder auch anorganische oder organische Füllstoffe, insbesondere Kreide, gemahlener Kalkstein, Dolomit, Titandioxid oder farbgebende Pigmente. Weiterhin sind oft Mittel gewünscht, um den pH-Wert zu beeinflussen oder auch um die Stabilität des Klebstoffes gegenüber bakteriellem Einfluß zu verbessern. Hier können die üblichen Konservierungsmittel verwendet werden.

Schließlich kann es vorteilhaft sein, den fließfähigen, Doppelbindungen aufweisendenden Kondensaten noch bekannte sogenannte Sikkative auf Basis von Kobalt-, Blei-oder Mangansalzen zuzusetzen. Dadurch kann die Zeit zur Ausbildung einer durchgehärteten Klebefuge noch verkürzt werden.

Die mit den erfindungsgemäß herstellbaren flüssigen Polykondensaten modifizierten Klebstoffe eignen sich zum Verbinden der verschiedensten, häufig auch saugfähigen Materialien miteinander. Beispielsweise kommen als Substrate in Frage: Bauwerkstoffe wie Beton, Estrich der verschiedensten Zusammensetzung, Holz, verschiedene Textilien wie Teppiche, Leinwand, oder aber auch wenig saugende Kunststoffbeläge. Insbesondere im letzteren Fall ist es von besonderem Vorteil, daß man neben einer besonders hohen Anfangsklebrikeit eine relativ geringe Menge an Wasser in die Klebefuge einbringt, die leicht von einem porösen Werkstoff aufgenommen und weiter transportiert werden kann.

Die mit den neuartigen Klebstoffen hergestellten Klebefugen zeigen keinen kalten Fluß, sondern sie erhärten im Laufe der Zeit zu sehr festen stabilen Schichten, die die miteinander verbundenen Substrate auf Dauer fest aneinanderbinden.

Beispiele

Herstellung von niedermolekularen Polykondensaten

Beispiel 1

In einem mit Rühreinrichtung versehenen beheizbaren Glaskolben, der außerdem mit Thermometer-Wasserabscheider und Kühler versehen war, wurde eine Mischung aus 304 g Tetrahydrophthalsäureanhydrid, 335 g Trimethylolpropan zusammen mit 100 ml Xylol und 2 g handelsüblichem Veresterungskatalysator, (R Swedeat 3) der Firma Swedstab AB, Astorp/Schweden) während 2 Stunden von 180 bis auf 220 °C erhitzt. Dabei destillierten 33 ml wäßriges Kondensat ab. Dann wurden 700 g Fettsäure aus Sonnenblumenöl zugesetzt und die Kondensation etwa 3 Stunden lang weitergeführt. Hierbei destillierten weitere 52 ml wäßriges Kondensat ab, und die Säurezahl war wiederum unter 3 gesunken. Anschließend wurde das Xylol abdestilliert, zuletzt im Vakuum. Man erhielt einen hellgelben, lufttrocknenden, flüssigen Polyester mit einer OH-Zahl von 50.

Beispiel 2

In der gleichen Apparatur - wie sie gemäß Beispiel 1 verwendet wurde - setzte man epoxidiertes Polybutadien (4,87 % Epoxidsauerstoff, durchschnittliches Molgewicht 1 100) im Stickstoffstrom während 2 1/2 Stunden bei 215 °C mit 152 g Diethanolamin um. Danach lag ein hellbraunes, klares öliges Produkt vor.

In der zweiten Verfahrensstufe wurden 630 g des bei der vorstehend beschriebenen Reaktion erhaltenen Produktes mit 783 g Fettsäure aus Sonnenblumenöl in Gegenwart von 4 g Zinnpulver als Katalysator und 100 ml Xylol im Stickstoffstrom zur Reaktion gebracht. Unter Rühren und schwachem Durchleiten vom Stickstoff schied sich während 3 Stunden bei einer Temperatur von 180 bis 200 °C insgesamt 51 ml wäßriges Kondensat ab. Die Säurezahl war bei dieser Reaktion auf unter 5 gesunken. Anschließend wurde das Xylol abdestilliert, zuletzt im Vakuum. Es wurde ein hellbrauner lufttrocknender öliger Polyester erhalten.

Beispiel 3

Der Apparatur gemäß Beispiel 1 wurden 204,3 g Pentaerythrit in Gegenwart von 5,3 g Zinnpulver mit 846 g Fettsäure aus Sonnenblumenöl im Stickstoffstrom während 3 Stunden bei 180 bis 220 °C kondensiert. Dabei schieden sich 56 ml wasserhaltiges Kondensat ab. Nach dem Abkühlen auf 100 °C wurden 111 g Adipinsäure zugesetzt, und die Veresterung bei einer Temperatur von 180 bis 200 °C weitergeführt. Während etwa 2 Stunden schieden sich weitere 29 ml wäßriges Kondensat ab.

Es wurde ein flüssiger hellgelber Oligoester erhalten, der eine Säurezahl von 1,1 und eine OH-Zahl von 72,6 hatte.

Herstellung von Klebstoffen

Beispiel 4

In einem mit Rührer ausgestattem Glasgefäß wurden 480 g einer 60%igen Dispersion eines Copolymerisates aus Polyacrylsäurebutylester und Vinylacetat vorgelegt. Das Carboxylgruppen enthaltende Copolymerisat verlieh der Dispersion einen pH-Wert von 5,0 und eine Viskosität bei 25 °C von 110 mPa•s (Kontraves Rheometer STVB III). Die Glastemperatur der gebildeten Filme lag bei etwa -20 °C.

Bei einer Temperatur von 90 °C wurde aus 300 g Balsamharz und 128 g des Reaktionsproduktes nach Beispiel 1 unter Zugabe von 10 g des Additionsproduktes von 6 Mol Ethylenoxid an 1 Mol Nonylphenol eine Mischung hergestellt. Diese wurde nach Abkühlen auf 70 °C langsam der vorstehend beschriebenen Dispersion zugefügt.

Die erhaltene homogene Dispersion hatte eine Viskosität von 20 mPa•s bei 20 °C nach Haake.

## Beispiel 5

Es wurde die gleiche Dispersion aus Polyacrylsäure-Vinylacetat-Mischpolymerem verwendet wie nach Beispiel 4. In diesem Fall wurde anstelle des flüssigen Polyesters nach Beispiel 1 das Polykondensat nach Beispiel 5 in einer Menge von ebenfalls 128 g auf 300 g Balsamharz eingesetzt.

Es resultierte eine homogene Dispersion, welche bei 20 °C eine Viskosität von 58 mPa•s nach Haake aufwies.

## Beispiel 6

In 580 g eines 50 gewichtsprozentigen SBR Latexes wurden nach Zugabe von 10 g eines nichtionogenen Emulgators (Additionsprodukt von 6 Mol Ethylenoxid an ein Mol Nonylphenol) eine 25 °C warme Mischung aus 270 g Balsamharz und 128 g des flüssigen Polyesters nach Beispiel 3 eingetragen. Die entstehende homogene Dispersion hatte bei 20 °C im Viskosimeter nach Haake eine Viskosität von 4 mPa•s.

## Beispiel 7

Zur Herstellung von Probeverklebungen wurden sogenannte Webteppiche mit Juterücken ("Girmes-Standard") verwendet. Dazu wurde Buchenholz mit einer üblichen Spachtelmasse, bestehend aus Portland- und Tonerdeschmelzzement, Gips, Quarzsand, Kreide und Kalkstein sowie geringeren Mengen Kasein in der dem Fachmann bekannten Weise abgespachtelt. Nach dem Trocknen über Nacht wurde mit dem Z-gezahnten Spachtel (7a) bzw. mit der Auftragsrolle (7b) die Klebstoffmischungen gemäß Beispiel 4 und 5 aufgetragen.

Die sonstige Ausführung des Beispiels erfolgte nach DIN 53277 (Scherfestigkeit). Der Vorschub wurde variiert zwischen 1 mm/min und 5 mm/min, ebenso die Lagerung der geklebten Muster bei genormtem Klima von 23 °C bei 55 % relativer Luftfeuchte. In der nachfolgenden Tabelle ist für die Mischungen gemäß 7a und 7b die Scherfestigkeit wiedergegeben, welche gemessen wurde nach Lagerung bei 1, 3 oder 8 Tagen und einem Vorschub von 1 bzw. 5 mm/min.

Tabelle

| Lagerung | Vorschub | Scherfestigkeit | |
| Tage | mm/min | 7a | 7b |
|---|---|---|---|
| 1 | 1 | 6,33 | 9,40 |
| 3 | 1 | 7,00 | 10,59 |
| 8 | 1 | 9,09 | 12,17 |
| 1 | 5 | 6,57 | 7,47 |
| 3 | 5 | 16,09 | 25,88 |
| 8 | 5 | 22,36 | 29,52 |

**Ansprüche**

1) Verfahren zur Herstellung von niedermolekularen, ungesättigten bei Raumtemperatur fließfähigen Polykondensaten, die mit filmbildenden wäßrigen Dispersionen von Polymeren verträglich sind, dadurch gekennzeichnet, daß man Doppelbindungen enthaltende Fettsäuren bzw. niedermolekulare epoxidierte Polybutadiene in an sich bekannter Weise mit Polyolen bzw. Aminen so umsetzt, daß die fließfähigen Reaktionsprodukte bei 25 °C eine Viskosität von 800 bis 25 000 mPa•s, vorzugsweise 1 000 bis 10 000 mPa•s aufweisen und die Säurezahlen zwischen 2 und 50, die OH-Zahlen zwischen 5 und 100 bzw. die Aminzahlen zwischen 5 und 100 liegen.

2) Verfahren zur Herstellung von niedermolekularen ungesättigten fließfähigen Kondensaten nach Anspruch 1, dadurch gekennzeichnet, daß man die Umsetzung so führt, daß die Reaktionsprodukte Säurezahlen zwischen 2 und 25 sowie OH-Zahlen zwischen 10 und 60 aufweisen und daß die Aminzahlen gegebenenfalls zwischen 10 und 60 liegen.

3) Verfahren zur Herstellung von niedermolekularen ungesättigten fließfähigen Polykondensaten, dadurch gekennzeichnet, daß man die Ausgangsmaterialien so wählt, daß Reaktionsprodukte mit Jodzahlen zwischen 50 und 300, vorzugsweise zwischen 70 und 150 anfallen.

4) Verwendung der Verfahrensprodukte nach den Ansprüchen 1 bis 3 zusammen mit klebrigmachenden Harzen aus der Gruppe Balsamharz, modifizierte Balsamharze, Cumaron-Inden-Harze, Terpenharze als Bestandteil wäßriger Dispersionen, die als filmbildende Polymerisatklebstoffe eingesetzt werden können.

5) Verwendung der Verfahrensprodukte nach den Ansprüchen 1 bis 3 als lösendes Vehikel für klebrigmachende Harze nach Anspruch 4, wobei das Gewichtsverhältnis der beiden Komponenten zwischen 1 : 0,5 und 1 : 8, insbesondere 1 : 1 und 1 : 4 beträgt.

6) Verwendung der Verfahrensprodukte nach den Ansprüchen 1 bis 3 in wäßrigen Klebstoffdispersionen auf Basis von Polymerisaten bzw. Copolymerisaten aus Vinylacetat, Vinylpropionat, Acrylsäureester von Monoalkoholen von 1 bis 8 Kohlenstoffatomen sowie gegebenenfalls weiteren üblichen Comonomeren wie auch Latices aus natürlichen und synthetischen Kautschuksorten wie Styrol-Butadien-Kautschuk.